# EUROPÄISCHE PATENTSCHRIFT

(11) **EP 3 291 989 B1**
(45) Veröffentlichungstag und Bekanntmachung des Hinweises auf die Patenterteilung: **10.07.2019**
(21) Anmeldenummer: 16722591.1
(22) Anmeldetag: 03.05.2016
(51) Int. Cl.: B41C 1/05, B41M 1/10, B41M 1/40, B41N 1/06, B41N 1/20

(54) **LASERGRAVIERBARE TAMPONDRUCKPLATTE**
LASER ENGRAVABLE PAD PRINTING PLATE
PLAQUE D'IMPRESSION AU TAMPON POUVANT ÊTRE GRAVÉ AU LASER

(30) Priorität: 04.05.2015 EP 15166176
(43) Veröffentlichungstag der Anmeldung: 14.03.2018
(73) Patentinhaber: Flint Group Germany GmbH, 70469 Stuttgart (DE)
(72) Erfinder: MÜHLFEIT, Markus, 71263 Weil der Stadt (DE); LEINENBACH, Alfred, 77704 Oberkirch-Nußbach (DE); UNGLAUBE, Jochen, 79341 Kenzingen (DE)
(74) Vertreter: Schuck, Alexander
(86) Internationale Anmeldenummer: PCT/EP2016/059844
(87) Internationale Veröffentlichungsnummer: WO 2016/177702

(56) Entgegenhaltungen:
- EP-A1- 1 172 227
- EP-A1- 1 177 911
- EP-A2- 2 047 987
- US-A- 5 700 619

## Beschreibung

Der Tampondruck ist ein indirektes Tiefdruckverfahren, das zum Bedrucken unterschiedlichster Materialien und Formen, auch dreidimensionaler Gegenstände, eingesetzt wird. Bei diesem Druckverfahren wird ein Druckklischee mit Vertiefungen (Näpfchen, Buchstaben, Linienelemente) mit Druckfarbe eingefärbt. Die überschüssige Druckfarbe wird von der Oberfläche der Druckform abgerakelt. Daraufhin wird ein weicher Gummi, der sogenannte Tampon, auf die Oberfläche der Druckform gepresst, wobei die Druckfarbe aus den Vertiefungen des Druckklischees auf den Tampon übertragen wird. Anschließend wird der Tampon emporgehoben und horizontal verfahren und dann auf den zu bedruckenden Gegenstand wieder abgesenkt. Um einen möglichst kompletten Farbübertrag zu erreichen, werden meist Gummimaterialien auf Silikonbasis verwendet.

Der Rakelprozess stellt an die mechanische Beständigkeit des Druckklischees hohe Anforderungen. Jede Beschädigung der Klischeeoberfläche - Kratzer durch Staubpartikel, Verunreinigungen der Druckfarbe oder ein unsauberes Rakelmesser - führt zum Tonen der Nichtbildstellen und macht das Klischee unbrauchbar. Für hohe Auflagen werden deshalb Stahlklischees verwendet, in die die Vertiefungen mittels photographischer Masken- und Ätzverfahren mit hohem Aufwand eingraviert werden.

Alternative Druckklischees basieren auf photopolymeren Schichtmaterialien. Diese beinhalten eine photopolymerisierbare Schicht auf einem stabilen Metallträger. Die photopolymerisierbare Schicht wird durch einen Film mittels UVA-Licht belichtet. Die belichteten Stellen der Aufzeichnungsschicht vernetzen und werden unlöslich, die nicht belichteten Stellen der Aufzeichnungsschicht bleiben löslich und werden in einem folgenden Auswaschschritt entfernt. Erwähnte Bindemittel sind Polyvinylalkohol und Polyamid. Zur Erhöhung der Kratzfestigkeit werden der photopolymeren Schicht mineralische Füllstoffe zugefügt. Ferner werden spezielle bifunktionelle Acrylate als Vernetzer beschrieben, die nach Belichten mit UVA-Licht harte, kratzbeständige Materialien liefern. Das Verfahren ist aber aufwändig und die photographischen Filme sind teuer.

In der EP 767 408 werden deshalb photopolymerisierbare Materialien beschrieben, die auf der photopolymeren Schicht eine dünne, schwarze Maskenschicht aufweisen, in die die Bildinformation mittels Laser eingeschrieben werden kann. Die photopolymerisierbare Schicht wird anschließend durch die erzeugte Maske mit UVA-Licht belichtet und vernetzt. Die nicht belichteten Stellen werden wiederum in einem Auswaschschritt entfernt. In diesem Verfahren wird kein Film mehr benötigt. Dennoch bleibt das Verfahren aufwändig und die Tiefe der einzelnen Näpfchen ist schwierig zu kontrollieren.

Einfacher wäre es, die Vertiefungen direkt mittels eines Lasers in die Druckform einzugravieren. Bekannt sind beispielsweise ein- oder mehrschichtige Metalldruckformen, in die die Vertiefungen direkt mittels eines Lasers eingraviert werden. Hierbei bildet sich um die eingravierten Bildelemente herum ein störender Grat, der durch das Schmelzen des Metalls entsteht. Dieser Grat muss aufwändig entfernt werden, damit ein gutes Rakelergebnis erhalten wird.

Keramische Klischees können ebenfalls mittels geeigneter Laser direkt graviert werden, wie beispielsweise in EP 1 701 852 beschrieben. Keramische Materialien neigen weniger zum Schmelzen und müssen daher nicht nachbearbeitet werden. Allerdings ist die Herstellung der keramischen Schichten in der erforderlichen Dickengenauigkeit aufwändig und teuer.

EP 1 172 227 schlägt deshalb vor, auf einen Metallträger einen Einkomponenten- oder Zweikomponentenlack in einer Schichtdicke von 0,1 bis 0,3 mm aufzutragen und das Relief in den gehärteten Lack einzugravieren. Die chemische Zusammensetzung des Lackes wird allerdings nicht beschrieben, so dass nicht bekannt ist, wie mit einem derartigen Aufbau eine ausreichende Rakelfestigkeit und ein gutes, gratfreies Gravurergebnis erzielt werden können. EP-A-2 047 987 beschreibt eine Druckplatte geeignet zur Verwendung als eine lasergravierbare Tampondruckplatte.

Aufgabe der Erfindung ist es, eine lasergravierbare Druckplatte für den Tampondruck bereitzustellen, die kostengünstig gefertigt werden kann, keine aufwändige Nachbearbeitung nach der Lasergravur erfordert und die die erforderliche Rakelbeständigkeit aufweist.

Gelöst wird die Aufgabe durch eine lasergravierbare Tampondruckplatte nach Anspruch 1.

Erfindungsgemässe Verfahren sind in den Ansprüchen 12 bis 14 definiert. Die Dicke der lasergravierbaren Aufzeichnungsschicht (c) richtet sich nach der benötigten Tiefe der zu gravierenden Bildelemente. Diese sind im Tampondruck in der Regel einige wenige µm bis maximal 50 µm tief. Für einige Spezialanwendungen, bei denen hohe Farbmengen übertragen werden müssen, werden Tiefen der Bildelemente von bis zu 150 µm benötigt. In der Regel sind aber Relieftiefen von bis zu 30 µm ausreichend. Die Dicke der lasergravierbaren Aufzeichnungsschicht liegt daher in einem Bereich von 20 bis 200 µm, bevorzugt von 20 bis 50 µm, insbesondere von 20 bis < 50 µm. Die Angaben beziehen sich auf die getrocknete Aufzeichnungsschicht.

Da Tampondruckklischees überwiegend mit unpolaren oder mäßig polaren Druckfarben verdruckt werden, bieten sich aus Gründen der Quellbeständigkeit gegen organische Lösungsmittel eher polare Bindemittel an. Das Bindemittel sollte ferner gute Dispergiereigenschaften für die verstärkenden anorganischen Füllstoffe aufweisen, gute mechanische Eigenschaften aufweisen, möglichst ohne Schmelzränder lasergravierbar sein und der lasergravierten Aufzeichnungsschicht (Druckklischee) eine sehr gute Rakelbeständigkeit verleihen.

Überraschenderweise wurde gefunden, dass mit Polyvinylalkoholen als Bindemittel lasergravierbare Schichten für Tampondruckplatten mit hervorragender Rakelbeständigkeit erhalten werden können.

Weiterhin weisen die erfindungsgemäßen lasergravierbaren Schichten auf Basis von Polyvinylalkohol eine sehr gute Quellbeständigkeit gegen organische Lösungsmittel auf, so dass die resultierenden Druckklischees gut mit unpolaren oder mäßig polaren Druckfarben verdruckt werden können. Weiterhin weist der Polyvinylalkohol gute Dispergiereigenschaften für verstärkende anorganische Füllstoffe auf und ergibt ohne Schmelzränder lasergravierbare Aufzeichnungsschichten, die gute mechanische Eigenschaften aufweisen.

Als Polyvinylalkohole bezeichnet man Polymere mit Vinylalkohol-Einheiten, insbesondere partiell oder vollständig verseifte Polyvinylacetate. Vinylacetat-Vinylalkohol-Copolymere sind durch das Molekulargewicht und den Verseifungsgrad (der prozentuale Anteil der Vinylalkohol-Einheiten im Polymer, bezogen auf die Gesamtzahl der Monomereinheiten) gekennzeichnet. Je nach Verseifungsgrad können die Kristallinität der Produkte und deren mechanische Eigenschaften gesteuert werden. Die polare Natur der OH-Gruppen ist ferner für das gute Dispergiervermögen der Polyvinylalkohole verantwortlich. Polyvinylalkohole sind auch aus Sicht der Lasergravierbarkeit gut geeignet. Sie zeigen kein ausgeprägtes Aufschmelzen, sondern zersetzen sich bei Einwirkung hoher Temperaturen - wie sie bei der Lasergravur entstehen - rückstandsfrei. Die mit Polyvinylalkoholen als Bindemittel formulierten Aufzeichnungsschichten lassen sich ohne Gratausbildung mittels IR-Lasern gravieren.

Für die erfindungsgemäßen Druckplatten werden partiell verseifte Polyvinylalkoholester mit einem mittleren bis hohen Verseifungsgrad bevorzugt. Bei zu niedrigem Verseifungsgrad sind die Polymere zu weich und gegenüber unpolaren Tampondruckfarben nicht mehr beständig. Bei sehr hohen Verseifungsgraden werden die Produkte zu hart und spröde, was sich insbesondere auf die Rakelfestigkeit/Kratzfestigkeit der Tampondruckklischees negativ auswirkt. Im Allgemeinen werden als Polyvinylakohole (c1) Polyvinylalkohole mit einem Verseifungsgrad von 50 % bis 98 % verwendet. Bevorzugt werden Polyvinylalkohole mit einem Verseifungsgrad von 60 % bis 90 % eingesetzt.

An Stelle oder zusammen mit Vinylacetat-Vinylalkohol-Copolymeren können auch andere Vinylalkohol-Copolymere, wie beispielsweise Poly(vinylpropionat-vinylalkohol), oder Poly(ethylen-vinylalkohol), als Bindemittel (c1) in der lasergravierbaren Aufzeichnungsschicht (c) eingesetzt werden, sofern sie mindestens 50 mol-% Vinylalkohol-Einheiten enthalten.

Bevorzugt ist also eine lasergravierbare Aufzeichnungsschicht (c), die als Polyvinylalkohol (c1) einen teilverseiften Polyvinylalkoholester mit einem Verseifungsgrad von 50 bis 98 mol-% enthält.

Als IR-Absorber für die Aufzeichnungsschicht eignen sich insbesondere feinteiliger Ruß, Graphit oder Ruß-Nanopartikel. Ruß hat ein breites Absorptionsspektrum, das sich aus dem sichtbaren Bereich bis in den IR-Bereich erstreckt. Ruß enthaltende Schichten können daher mit allen marktüblichen Lasern wie beispielsweise IR-Laserdioden (830 nm) oder Nd-YAG-Festkörperlasern oder -Faserlasern (1064 nm) oder CO₂-Lasern (10,6 µm) graviert werden. Selbstverständlich kann die lasergravierbare Aufzeichnungsschicht aber auch andere IR-Absorber auf Pigmentbasis oder lösliche Farbstoffe enthalten. Als Farbstoffe können beispielsweise Phthalocyanine und substituierte Phthalocyanin-Derivate, Cyanin-, und Merocyaninfarbstoffe oder auch Polymethinfarbstoffe oder Azofarbstoffe verwendet werden. Diese Farbstoffe absorbieren im nahen IR-Bereich, so dass Laserdioden (830 nm) und Nd-YAG-Laser (1064 nm) zur Gravur eingesetzt werden können.

Vorzugsweise enthält die Aufzeichnungsschicht (c) als IR-Absorber (c2) Ruß, Graphit oder Kohlenstoff-Nanopartikel.

Als IR-Absorber wird besonders bevorzugt Ruß eingesetzt, da der Ruß gleichzeitig als mechanisches Verstärkungsmittel wirkt und die mechanische Widerstandsfähigkeit der lasergravierbaren Aufzeichnungsschicht erhöht.

Die Menge der IR-Licht absorbierenden Materialien (c2) beträgt 5 bis 50 Gew.-% bezüglich der Menge aller Komponenten der lasergravierbaren Aufzeichnungsschicht. Bevorzugt ist eine Menge von 10 bis 30 Gew.-%.

Eine weitere Komponente der lasergravierbaren Aufzeichnungsschicht sind mineralische Füllstoffe, die die Schicht mechanisch verstärken und der Schicht so die notwendige Kratzfestigkeit und Rakelbeständigkeit verleihen.

Als Füllstoffe kommen insbesondere harte, anorganische Füllstoffe und Pigmente in Frage. Besonders geeignete Füllstoffe sind beispielsweise Siliziumdioxid, insbesondere Quarzmehle und Quarzpulver, Silikate, insbesondere Aluminiumsilikate, Silikatgläser, Aluminiumoxide, insbesondere Korund, Titandioxid, Siliziumcarbid, Wolframcarbid und ähnliche harte Mineralien. Geeignete Pigmente sind beispielsweise Eisen- oder Chromoxide.

Die Härte der Füllstoffe sollte > 4.0 auf der Mohs-Härteskala betragen. Der mittlere Teilchendurchmesser der anorganischen Füllstoffe beträgt in der Regel 0,1 µm bis 6 µm. Weniger als 5% der Teilchen, bevorzugt weniger als 1% der Teilchen sollten größer als 10 µm sein. Die Form der Füllstoffe ist beliebig. Die meisten harten Füllstoffe bilden keine runden Partikeln, sondern weisen beliebige kristalline Formen auf. Die Länge der einzelnen Kristalle (unter dem Mikroskop ausgemessen) sollte aber vorzugsweise nicht mehr als 10 µm betragen.

Die Füllstoffe können oberflächenbehandelt oder beschichtet sein, um besonders gut in der polymeren Matrix dispergierbar zu sein. Oberflächenbehandelte Quarzmehle sind bevorzugt, da sie die notwendige Härte aufweisen und eine gute Anbindung an die polymere Matrix ermöglichen. Besonders bevorzugt sind Quarzmehle, deren Oberfläche mittels Silanen (Aminosilan, Epoxysilan, Methacrylsilan, Methylsilan und Vinylsilan) vorbehandelt sind, und die einfach durch Einrühren in die Polyvinylalkohollösung gleichmäßig dispergiert werden können.

Der mineralische Füllstoff ist vorzugsweise in der Aufzeichnungsschicht enthalten, im Allgemeinen in Mengen von 5 bis 30 Gew.-%. Die Menge an IR-Absorber (c2) und mineralischem Füllstoff (c3) beträgt in der Summe nicht mehr als 60 Gew.-%. Bevorzugt beträgt sie nicht mehr als 50 Gew.-%, bezogen auf alle Komponenten der lasergravierbaren Aufzeichnungsschicht.

Bevorzugt enthält die Aufzeichnungsschicht (c) also 5 bis 30 Gew.-% eines anorganischen Füllstoffes (c3), insbesondere eines anorganischen Füllstoffs (c3) mit einer Härte von > 4 Mohs. In einer Ausführungsform der Erfindung enthält die Aufzeichnungsschicht (c) als anorganischen Füllstoff (c3) ein Quarzmehl, dessen Oberfläche mit Silanen modifiziert wurde.

In einer weiteren Ausführungsform der Erfindung wird die Aufzeichnungsschicht zusätzlich zur der mechanischen Verstärkung durch den IR-Absorber (c2), vorzugsweise Ruß, und gegebenenfalls durch den anorganischen Füllstoff (c3), noch chemisch vernetzt. Die unvernetzten Aufzeichnungsschichten aus Polyvinylalkohol, Ruß und anorganischem Füllstoff haben zwar bereits eine gute Rakelfestigkeit. Diese kann aber durch chemische Vernetzung des Polyvinylalkohols noch weiter erhöht werden. Auch die Beständigkeit der Aufzeichnungsschicht gegenüber hoher Luftfeuchte wird erheblich verbessert, wenn der Polyvinylalkohol chemisch vernetzt wird. Unvernetzte Aufzeichnungsschichten enthaltend Polyvinylalkohol müssen vorsichtig gehandhabt werden. Zur Vermeidung von Fingerabdrücken auf der Druckplattenoberfläche empfiehlt sich das Tragen von Handschuhen. Aufzeichnungsschichten auf Basis von vernetztem Polyvinylalkohol sind dagegen gegenüber Feuchtigkeit oder Fingerabdrücken relativ unempfindlich, so dass keine besonderen Maßnahmen bei der Handhabung der Tampondruckplatten erforderlich sind.

Zur chemischen Vernetzung der Aufzeichnungsschicht auf Basis von Polyvinylalkoholen kommen verschiedene Vernetzer in Betracht, wie mehrfach funktionelle Isocyanate, einfach oder mehrfach funktionelle Aldehyde, mehrfach funktionelle Epoxide, mehrfach funktionelle Carbonsäuren und mehrfach funktionelle Carbonsäureanhydride.

Geeignete mehrfach funktionelle Isocyanate sind Toluol-2,4-diisocyanat (TDI), Methylendiphenyldiisocyanat (MDI), Hexamethylendiisocyanat (HDI, HMDI), polymeres Methylendiphenyldiisocyanat (PMDI), Isophorondiisocyanat (IPDI), 4,4'-Diisocyanatodicyclohexylmethan (H12MDI) sowie blockierte aromatische Polyisocyanate auf Basis von TDI und blockierte aliphatische Polyisocyanate auf Basis von HDI.

Geeignete einfach funktionelle Aldehyde sind Formaldehyd, Acetaldehyd, Propionaldehyd, Valeraldehyd, Capronaldehyd und Pivalaldehyd.

Geeignete mehrfach funktionelle Aldehyde sind Glyoxal, Glutaraldehyd (1,5-Pentandial), Succinaldehyd (Butandial) und Terephthalaldehyd.

Geeignete mehrfach funktionelle Epoxide sind 1,2,3,4-Diepoxybutan, 1,2,5,6-Diepoxyhexan, 1,2,7,8-Diepoxyoctan sowie Epoxidharze wie Bisphenol-A-diglycidylether, oder Epoxyphenol-Novalake.

Geeignete mehrfach funktionelle Carbonsäuren sind Oxalsäure, Malonsäure, Bernsteinsäure, Glutarsäure, Adipinsäure, Pimelinsäure, Suberinsäure, Azelainsäure, Sebacinsäure, Weinsäure, Citronensäure, Terephthalsäure, Phthalsäure, Asparaginsäure und Glutaminsäure.

Geeignete mehrfach funktionelle Carbonsäureanhydride sind Maleinsäureanhydrid, Bernsteinsäureanhydrid und Phthalsäureanhydrid.

Von den Vernetzungsreaktionen ist insbesondere die Umsetzung von Polyvinylalkoholen mit mehrfach funktionellen Isocyanaten, mehrfach funktionellen Epoxiden oder ein- oder mehrfach funktionellen Aldehyden bevorzugt. Diese Vernetzungsreaktionen laufen bei nicht zu hohen Temperaturen nahezu quantitativ ab. Bevorzugte Vernetzer sind Aldehyde wie Formaldehyd, Acetaldehyd, Propionaldehyd, Butyraldehyd und höhere Aldehyde. Diese Vernetzer haben neben ihrer hohen Reaktivität noch den weiteren Vorteil, dass sie nur aus Kohlenstoff, Sauerstoff und Wasserstoff bestehen. In Verbindung mit Polyvinylalkoholen ergeben sich so Aufzeichnungsschichten, die bei der Lasergravur erheblich weniger toxische Gase freisetzen als Aufzeichnungsschichten, die Stickstoff-haltige Komponenten enthalten, wie beispielsweise Isocyanate.

Besonders bevorzugt ist die Vernetzung mit mehrfach funktionellen Aldehyden wie beispielsweise Glyoxal, Glutardialdehyd oder Glyoxylsäure. Ganz besonders bevorzugt ist Glyoxal. Dieser Aldehyd liegt bereits als wässrige Lösung vor und kann daher problemlos zu wässrigen oder alkoholischen Polyvinylalkohollösungen zugemischt werden. Die Lösungen sind bei Raumtemperatur ausreichend stabil und können daher gut schichtweise aufgetragen werden. Nach der Beschichtung werden die Schichten kurzfristig auf Temperaturen von 100 °C bis 150 °C erwärmt. Das Glyoxal reagiert unter diesen Bedingungen mit den OH-Gruppen des Polyvinylalkohols über die Halbacetale zu den stabileren Acetalen ab. Der Polyvinylalkohol ist anschließend vernetzt. Die Aufzeichnungsschicht kann nicht mehr durch Wasser oder ein Wasser/Alkohol-Gemisch gelöst oder fein verteilt dispergiert werden.

Das Vernetzen der Aufzeichnungsschicht hat noch einen weiteren Vorteil. Es kann erforderlich sein, die gewünschte Trockenschichtdicke durch Aufbau der Schicht in mehreren einzelnen Beschichtungsvorgängen zu erreichen. Wird eine unvernetzte Schicht mit einer identischen Beschichtungslösung überschichtet, wird diese Schicht angelöst. Es kommt zu Verlaufsstörungen, die die Beschichtungsqualität beeinträchtigt. Eine vernetzte Schicht kann dagegen problemlos überschichtet werden. So können durch Aufbau der Schicht in mehreren Beschichtungsvorgängen sehr viel höhere Schichtdicken erreicht werden.

Der Vernetzer ist in der Aufzeichnungsschicht im Allgemeinen in Mengen von 0,1 bis 20 Gew.-%, bezüglich der Menge aller Komponenten der lasergravierbaren Aufzeichnungsschicht, enthalten. Bevorzugt beträgt der Anteil an Vernetzer von 1 bis 10 Gew.-%.

Vorzugsweise enthält die lasergravierbare Aufzeichnungsschicht (c) also zusätzlich zu den Komponenten (c1), (c2) und gegebenenfalls (c3) noch 0,1 bis 20 Gew.-% eines Vernetzers (c4). Bevorzugte Vernetzer sind Glyoxal oder Glutardialdehyd.

Neben den Komponenten (c1), (c2), gegebenenfalls (c3) und gegebenenfalls (c4) kann die Aufzeichnungsschicht als weitere Additive (c5) noch Komponenten wie Weichmacher, Verlaufs- und Dispergierhilfsmittel enthalten. Additive sind im Allgemeinen in Mengen von 0 bis 10 Gew.-%, vorzugsweise 0,1 bis 5,0 Gew.-%, bezogen auf die Summe aller Komponenten (c1) bis (c5), in der Aufzeichnungsschicht enthalten. Die Summe der Komponenten (c1) bis (c5) ergibt 100 Gew.-%.

Die lasergravierbare Aufzeichnungsschicht befindet sich auf einem metallischen Trägermaterial. Aluminium oder Stahl werden als metallische Träger bevorzugt. Stahl hat den Vorteil, dass das Tampondruckklischee dann magnetisch in der Tampondruckmaschine fixiert werden kann. Die Dicke des metallischen Trägers kann 0,05 mm bis 1 mm betragen. Wird Stahl als Trägermaterial verwendet, sind Stahlbleche mit einer Dicke von 0,05 bis 0,3 mm bevorzugt. Zum Schutz gegen Korrosion werden bevorzugt verzinnte Stahlbleche verwendet.

Zur guten Anbindung der lasergravierbaren Aufzeichnungsschicht an den metallischen Träger (a) wird auf diesen mindestens eine Haftschicht (b) aufgetragen. Gut geeignete Haftschichten sind beispielsweise 2K-Polyurethanhaftlacke enthaltend ein Polyol und ein mehrfach funktionelles Isocyanat. Alternativ können Epoxidlacke oder radikalisch härtende Haftlacke verwendet werden. Zur besseren Anbindung der Aufzeichnungsschicht an den Metallträger können die Haftlacke Pigmente oder weitere Additive enthalten. Die Dicke der Haftlackschicht bzw. der verschiedenen Haftschichten beträgt in der Regel wenige Mikrometer, bevorzugt 1 µm bis 20 µm.

Zum Schutz der Druckplattenoberfläche weisen die erfindungsgemäßen Tampondruckplatten eine Deckfolie auf, die erst vor der Verarbeitung der Tampondruckplatte zum Druckklischee entfernt wird. Gut geeignet sind PET-Deckfolien, die 50 µm bis 200 µm dick sind und eine mittlere Rauhigkeit aufweisen. PET-Folien mit einer gemittelten Rauhtiefe zwischen 0,3 µm und 3 µm werden bevorzugt als Deckfolien verwendet.

Die einzelnen Schichten der erfindungsgemäßen Tampondruckplatte können in beliebiger Weise durch Sprühen, Walzen oder Rakelverfahren aufgebracht werden.

In einer bevorzugten Ausführungsform wird der metallische Träger zuerst mit dem oder den Haftlacken beschichtet. Parallel dazu wird die lasergravierbare Aufzeichnungsschicht auf die PET-Deckfolie aufgetragen. Hierzu wird der Polyvinylalkohol in Wasser oder Wasser/Alkohol-Mischungen gelöst, und anschließend wird Ruß zugegeben. Die Suspension wird dann mehrere Stunden lang in einer Kugelmühle dispergiert, wodurch eine feine Dispergierung des Rußes erreicht wird. Anschließend werden die übrigen Komponenten der Aufzeichnungsschicht zugegeben. Die Lösung wird dann in einem oder mehreren Schritten auf die PET-Folie beschichtet und anschließend getrocknet.

Bei der Trocknung wird die Aufzeichnungsschicht kurzzeitig auf Temperaturen zwischen 100 und 150 °C erhitzt, wobei der Polyvinylalkohol mit dem Vernetzer, falls in der Aufzeichnungsschicht vorhanden, abreagiert. Die notwendigen Trocknungszeiten bzw. Reaktionszeiten liegen im Bereich einiger weniger Sekunden. Anschließend wird die beschichtete Deckfolie auf den metallischen Träger auflaminiert. Dieses Laminierverfahren kann trocken, unter Einwirkung von Wärme oder mit Hilfe eines Kaschierlösungsmittels durchgeführt werden.

Wird die Aufzeichnungsschicht nicht in einem einzigen Beschichtungsvorgang, sondern in mehreren aufeinander folgenden Teilbeschichtungen hergestellt, ist es vorteilhaft, wenn die Aufzeichnungsschicht einen Vernetzer enthält. Die zuerst aufgetragene Schicht vernetzt dann bei der Trocknung und kann anschließend problemlos mit einer identischen Beschichtungslösung überschichtet werden. Eine unvernetzte Schicht kann dagegen nicht überschichtet werden. Es kommt, wie ausgeführt, zu Verlaufsstörungen und die Beschichtungsqualität wird beeinträchtigt.

Wird die Aufzeichnungsschicht zuerst auf eine Deckfolie beschichtet und erst danach auf den metallischen Träger laminiert, ergeben sich überraschenderweise bessere Druckergebnisse als wenn die einzelnen Schichten nacheinander auf den metallischen Träger aufgebracht und am Ende mit einer Deckfolie abgedeckt werden. Vermutlich wird die Oberflächengeometrie der PET-Folie beim Aufgießen der Aufzeichnungsschicht auf diese abgebildet und es entsteht eine gleichmäßigere Oberfläche, wodurch sich ein besseres Gleitverhalten des Rakelmessers in der Tampondruckmaschine ergibt.

Bevorzugt ist also ein Verfahren zur Herstellung einer erfindungsgemäßen Tampondruckplatte mit den Schritten
(i) Beschichtung des Metallträgers mit der Haftschicht,
(ii) Auftragen der lasergravierbaren Aufzeichnungsschicht auf die PET-Deckfolie und Trocknung der Aufzeichnungsschicht,
(iii) Auflaminieren der beschichteten PET-Deckfolie auf den mit der Haftschicht beschichteten Metallträger.

Gegenstand der vorliegenden Erfindung ist auch ein Verfahren zur Herstellung eines Tampondruckklischees aus einer erfindungsgemäßen lasergravierbaren Tampondruckplatte mit den Schritten (iv) bis (vi):
(iv) Abziehen der Deckfolie von der Tampondruckplatte,
(v) Eingravieren der Vertiefungen in die lasergravierbare Aufzeichnungsschicht mittels eines IR-Lasers,
(vi) Reinigung des lasergravierten Tampondruckklischees durch Abspülen mit einem Lösungsmittel.

Nach dem Abziehen der Deckfolie werden die Vertiefungen mit Hilfe eines Lasers in die Aufzeichnungsschicht der Tampondruckplatte eingraviert. Wird Ruß als IR-Absorber verwendet, dann lassen sich die erfindungsgemäßen Tampondruckplatten mit allen marktüblichen Lasern, wie beispielsweise IR-Laserdioden (830 nm) oder Nd-YAG-Festkörper- oder Faserlaser (1064 nm) oder CO₂-Lasern (10,6 µm) gravieren. Bezüglich Feinheit der Lasergravur bzw. maximale Auflösung der Gravur gilt grundsätzlich, dass Nd-YAG Laser bzw. im nahen IR arbeitende Laserdioden den CO₂-Lasern überlegen sind.

Bei sehr feinen Linien oder Bildelementen werden diese ohne weitere Aufarbeitung der Daten in die Aufzeichnungsschicht eingeschrieben. Bei hochqualitativen Anwendungen, oder wenn größere Bildelemente verdruckt werden sollen, ist es üblich, die Bildelemente zusätzlich aufzurastern, um der Rakel eine Auflagefläche zu geben und ein Absacken der Rakel in den Bildelementen zu vermeiden. Um dies zu ermöglichen, werden die Bildelemente mit einem Punkt- oder Linienraster versehen. Die Auflösung des Rasters liegt üblicherweise in der Größenordnung von 60 bis 120 L/cm. Etwa 10 bis 30% der Fläche bleiben erhaben stehen und bilden einzelne Rasterpunkte oder Linien/Gitterstrukturen aus, auf denen die Rakel gleiten kann. Der Durchmesser der erhabenen Rasterpunkte liegt dann je nach Auflösung und gewählter Flächendeckung bei etwa 20 µm bis 100 µm. Je nach gewählter Auflösung und Flächendeckung können die erhabenen Punkte auch quadratisch sein oder komplexere eckige Formen aufweisen. Beim Druck wird anschließend die Farbe, die sich in den Vertiefungen zwischen den erhabenen Elementen befindet, auf den Tampon übertragen. Es versteht sich von selbst, dass die erhabenen feinen Raster- und Linienelemente beim Drucken einer enormen mechanischen Belastung ausgesetzt sind. Ist die Rakelbeständigkeit unzureichend, werden einzelne Rasterpunkte abrasiert oder fallen ganz weg oder es zeigen sich Kratzer oder Ausbrüche an den Linienelementen.

Die Gravurtiefen liegen in der Regel zwischen 20 und 30 µm. Für die Lasergravur der erfindungsgemäßen Tampondruckplatten wird im Allgemeinen ein Energieeintrag von 10 J/cm² bis zu 20 J/cm² benötigt. Bei höheren Energien wird die Auflösung der feinen Elemente beeinträchtigt. Die feinen Elemente werden nicht mehr detailgenau abgebildet. Sie werden beschädigt oder schmelzen teilweise an oder verbrennen. Bei zu geringen Energien wird nicht ausreichend tief graviert.

Die Laser können die Tampondruckplatte flach oder, aufgespannt auf eine Trommel, rund gravieren. Die Gravur kann auch direkt in der Tampondruckmaschine erfolgen. Nach der Gravur werden die Tampondruckklischees meist durch Abspülen mit einer Reinigungsflüssigkeit von Laserstaub und anderen Verunreinigungen gesäubert. Für die erfindungsgemäßen Tampondruckplatten sind Reiniger auf Basis von Kohlenwasserstofflösemitteln, Estern oder Ketonen gut geeignet. Wasser und Alkohole sind dagegen wegen der Quellung der Tampondruckklischees weniger geeignet.

Die Rakelbeständigkeit der erfindungsgemäßen Tampondruckklischees hängt neben der Zusammensetzung der Aufzeichnungsschicht auch von der Oberflächengüte und der Rauhigkeit der Oberfläche ab. Typische Rauhigkeitswerte, gemessen als gemittelte Rauhtiefe Rz nach DIN 4768, sollten größer als 0,3 µm und kleiner als 3 µm sein. Bei höheren Rauwerten kann die Platte tonen, d.h. an den Nichtbildstellen Druckfarbe übertragen. Bei ganz glatten Schichten ist die Rakelbeständigkeit überraschenderweise geringer.

Die gravierten Tampondruckklischees werden anschließend in der Tampondruckmaschine montiert. Meist werden die Klischees magnetisch fixiert, was natürlich einen magnetischen Stahlträger erfordert. Man unterscheidet Maschinen mit geschlossenem und offenem Farbrakeltopf. Für hochqualitative Drucke werden Maschinen mit geschlossenem Rakeltopf bevorzugt. Allerdings ist hier die mechanische Belastung der Klischees höher als im offenen System.

Beim Druck kommen lösemittelbasierte Einkomponentenfarben oder Zweikomponentenfarben zum Einsatz. Meist werden Druckfarben auf Basis von Polyesterharzen verwendet. Typische Lösungsmittel sind aromatische oder aliphatische Kohlenwasserstofflösemittel, Cyclohexanon und Acetate. Als Härter werden meist polyfunktionelle aliphatische Isocyanate verwendet. Diese benötigen zur finalen Durchhärtung oft mehrere Tage. In jüngster Zeit werden auch vermehrt UVhärtende Druckfarben eingesetzt.

Gegenstand der vorliegenden Erfindung ist somit auch ein Verfahren zum Bedrucken eines Substrates im Tampondruckverfahren mit einem erfindungsgemäßen Tampondruckklischee, das nach dem vorstehend beschriebenen Verfahren erhältlich ist, mit den Schritten (vii) bis (x):
(vii) Befestigung des Tampondruckklischees in der Tampondruckmaschine,
(viii) Einfärben des Tampondruckklischees mit einer lösemittelbasierten Tampondruckfarbe,
(ix) Abstreifen der überschüssigen Druckfarbe mittels eines Rakels,
(x) Übertragung der Druckfarbe mittels eines Tampongummis auf das zu bedruckende Substrat.

Die Erfindung wird durch die nachstehenden Beispiele näher erläutert.

### Beispiele

### Herstellung von Tampondruckplatten

### Beispiel 1

Ein 240 µm dickes, verzinntes Stahlblech wurde mit einem 2-Komponenten-Polyurethanhaftlack (2K-PUR-Decklack GM60-6203 von BASF und Desmodur L67MPA/X von Bayer als Härter im Verhältnis 2:1) in einem Vorhanggießer beschichtet. Nach Auftrag des Haftlacks wurde das Blech bei 250°C 1 Minute eingebrannt. Die mittlere Auftragsstärke des Haftlacks betrug 15 µm.

Parallel dazu wurde eine PET-Folie mittlerer Rauhigkeit (Melinex 383, Schichtstärke 125 mm, erhältlich von Dupont-Teijin) mit der lasergravierbaren Aufzeichnungsschicht beschichtet. Die Zusammensetzung der Aufzeichnungsschicht wird in der nachstehenden Tabelle wiedergegeben.

| Komponente | Funktion | Hersteller | Anteil fest |
|---|---|---|---|
| | | | (Gew.-%) |
| Alcotex 72.5 | Bindemittel | Kuraray | 63,00 |
| Ruß (Pigment Black 7) | IR-Absorber | Lanxess | 27,75 |
| Syloid ED3 | Füllstoff | Degussa | 8,99 |
| Capstone FS-30 | Verlaufshilfsmittel | Dupont | 0,26 |
| Summe | | | 100 |

Die Komponenten der Aufzeichnungsschicht wurden in Wasser/n-Propanol im Verhältnis 3:1 gelöst (Feststoffgehalt 16.3 Gew.-%) und 3 h in einer Kugelmühle dispergiert. Die Lösung wurde auf einer Beschichtungsanlage mit doppeltem Auftragswerk im Dosierwalzenauftragsverfahren aufgetragen. Im ersten Auftragswerk wurde eine Trockenschichtdicke von 10 µm, im zweiten Auftragswerk eine Trockenschichtdicke von 20 µm aufgetragen. Die Bahngeschwindigkeit betrug 10 m/min, die Länge des Trockenkanals etwa 12 m, so dass sich eine Trocknungszeit von 72 Sekunden ergibt. Die Trocknung erfolgte durch beheizte Umluft im Gegenstromverfahren. Die maximale Temperatur der Umluft im Trockner betrug 145 °C. Die mit der Aufzeichnungsschicht beschichtete PET-Folie wurde anschließend auf das beschichtete Stahlblech auflaminiert. Als Kaschierhilfsmittel wurde n-Propanol verwendet. Die Tampondruckplatten wurden danach 2 Tage lang bei Raumtemperatur gelagert und anschließend weiterverarbeitet.

### Beispiel 2

Durchführung wie gemäß Beispiel 1, jedoch ohne anorganischen Füllstoff in der Aufzeichnungsschicht.

### Beispiel 3

Durchführung wie gemäß Beispiel 1, jedoch wurde die Aufzeichnungsschicht zusätzlich mit Glyoxal vernetzt.

Die Zusammensetzung der Aufzeichnungsschicht gemäß Beispiel 3 wird in der nachstehenden Tabelle wiedergegeben.

| Komponente | Funktion | Hersteller | Anteil fest (Gew.-%) |
|---|---|---|---|
| Alcotex 72.5 | Bindemittel | Kuraray | 61,35 |
| Ruß (Pigment Black 7) | IR-Absorber | Lanxess | 27,02 |
| Syloid ED3 | Füllstoff | Degussa | 8,75 |
| Glyoxal | Vernetzer | BASF | 2,62 |
| Capstone FS30 | Verlaufshilfsmittel | Dupont | 0,26 |
| Summe | | | 100 |

### Beispiel 4

Durchführung wie gemäß Beispiel 3, jedoch wurde als anorganischer Füllstoff Silbond 800 EST von Quarzwerke Group eingesetzt.

### Lasergravur und Druckversuche

Die Deckfolie der Tampondruckplatten aus den Beispielen 1 bis 4 wurde entfernt. Die Platten wurden auf die Trommel eines IR-Lasers (Thermoflex X 48, Xeikon) montiert und mit einer Auflösung von 5080 dpi gelasert. Das gelaserte Motiv umfasste drei verschiedene Rasterkeile, wobei die Auflösung des gewählten Rasters 80 L/cm, 100 L/cm und 120 L/cm betrug. Die Flächendeckung wurde bei jeder Lineatur von 70 bis 90% variiert. Als Flächendeckung wird im Tampondruck die prozentuale Fläche, die mittels Gravur entfernt wird, im Vergleich zur Gesamtfläche bezeichnet.

Die Leistung des Lasers betrug 30 Watt. Bei einer Umdrehungsgeschwindigkeit von 3,5 Umdrehungen pro Sekunde wurde die optimale Abbildungsschärfe erreicht. Diese Umdrehungsgeschwindigkeit entspricht einem Energieeintrag von 15 J/cm².

Anschließend wurden die gravierten Klischees auf einer Tampondruckmaschine (Fa. Morlock, geschlossener Rakeltopf) montiert. Als Tampondruckfarbe wurde eine lösemittelbasierte Tampondruckfarbe Marabu TPY980 (Weiß) eingesetzt. Die Farbe enthält Kohlenwasserstoffe, Ketone und Acetate als Lösemittel. Als Härter wurde 10% Isocyanat-Härter H1 von Marabu zugesetzt. Die Klischees wurden mit einer Frequenz von jeweils 1000 Rakelungen pro Stunde bearbeitet und nach jeweils 1 Stunde einer mikroskopischen Überprüfung auf Beschädigungen / Materialabtrag etc. unterzogen. Sobald erste Beschädigungen, z.B. das Fehlen einzelner Rasterelemente, nachgewiesen werden konnten, wurde der Versuch abgebrochen und die Rakelanzahl notiert.

Die Ergebnisse der Druckversuche sind in der nachstehenden Tabelle wiedergegeben.

| Beispiel | 1 | 2 (Vergleich) | 3 | 4 |
|---|---|---|---|---|
| Abziehen der Deckfolie | Leicht | leicht | leicht | leicht |
| Haftung der Aufzeichnungsschicht | nicht abzieh bar | nicht abzieh bar | nicht abzieh bar | nicht abzieh bar |
| Wasserlöslichkeit der Aufzeichnungsschicht | Löslich | löslich | unlöslich | unlöslich |
| Laserenergie (J/cm²) | 14,0 | 14,0 | 14,0 | 14,0 |
| Gravurtiefe (µm) | 28 | 30 | 31 | 30 |
| Abmessung der erhabenen Elemente bei 120 L/cm und Flächendeckung 90% | 15x15 µm | 15x15 µm | 15x15 µm | 15x15 µm |
| Rakelfestigkeit | 4000 | 1000 | >40.000 | >40.000 |
| Handhabung | schwierig | schwierig | einfach | einfach |

Von allen Klischees konnte die Deckfolie leicht abgezogen werden. Die Haftung zum lackierten Stahlträger war hoch. Die Aufzeichnungsschicht konnte nicht mehr vom Träger abgezogen werden. Nach dem Beschichten und Trocknen blieb die Aufzeichnungsschicht in den Versuchen ohne Vernetzer wasserlöslich, d.h. die Schicht konnte fein dispers gelöst werden. Die vernetzten Schichten waren in Wasser dagegen unlöslich. Die Handhabung der vernetzten Aufzeichnungsschichten war unproblematisch. Bei Berührung der unvernetzten Plattenoberflächen aus den Beispielen 1 und 2 zeigten diese dagegen deutliche Fingerabdrücke.

Die Druckplatten wurden mit einer Laserenergie von 14 J/cm² graviert. Die Gravurtiefe von ca. 30 µm wurde bei allen Klischees erreicht. Es konnten bei allen Klischees feine Elemente bis zu einer Flächendeckung von 90 % abgebildet werden. Die erhabenen, feinen Elemente waren in etwa quadratisch mit einer Kantenlänge von 15 µm. Auf keinem Klischee konnte ein Schmelzgrat erkannt werden.

Bemerkenswert war die unerwartet gute Rakelbeständigkeit der Druckplatte aus Beispiel 1 ohne chemischen Vernetzer, die bis zu 4000 Rakelungen unbeschadet überstand. Dagegen war die Rakelfestigkeit der Druckplatte gemäß Beispiel 2 (ohne anorganischen Füllstoff) deutlich schlechter. Exzellente Rakelfestigkeiten hatten die Druckplatten der Beispiele 3 und 4, in denen die Aufzeichnungsschicht zusätzlich chemisch vernetzt wurde. Nach 40 000 Rakelungen waren diese Klischees immer noch unbeschädigt.

## Patentansprüche

1. Lasergravierbare Tampondruckplatte umfassend mindestens
(a) einen Metallträger,
(b) eine Haftschicht,
(c) eine lasergravierbare Aufzeichnungsschicht mit einer Schichtdicke von 20 µm bis 200 µm enthaltend
(c1) 40 bis 95 Gew.-% eines Polyvinylalkohols,
(c2) 5 bis 50 Gew.-% eines IR-Absorbers,
(c3) 0 bis 30 Gew.-% eines anorganischen Füllstoffes,
(c4) 0,1 bis 20 Gew.-% eines Vernetzers und
(c5) 0 bis 10 Gew.-% weiterer Additive
(d) eine Deckfolie,
**dadurch gekennzeichnet, dass** der Vernetzer (c4) ausgewählt ist aus der Gruppe bestehend aus mehrfach funktionellen Isocyanaten, einfach oder mehrfach funktionellen Aldehyden, mehrfach funktionellen Epoxiden, mehrfach funktionellen Carbonsäuren und mehrfach funktionellen Carbonsäureanhydriden.

2. Lasergravierbare Tampondruckplatte nach Anspruch 1, **dadurch gekennzeichnet, dass** die lasergravierbare Aufzeichnungsschicht (c) als Polyvinylalkohol (c1) einen teilverseiften Polyvinylalkoholester mit einem Verseifungsgrad von 50 bis 98 mol-% enthält.

3. Lasergravierbare Tampondruckplatte nach Anspruch 1 oder 2, **dadurch gekennzeichnet, dass** die Aufzeichnungsschicht (c) als IR-Absorber (c2) Ruß, Graphit oder Kohlenstoff-Nanoartikel enthält.

4. Lasergravierbare Tampondruckplatte nach einem der Ansprüche 1 bis 3, **dadurch gekennzeichnet, dass** die Aufzeichnungsschicht (c) 5 bis 30 Gew.-% eines anorganischen Füllstoffes enthält.

5. Lasergravierbare Tampondruckplatte nach einem der Ansprüche 1 bis 4, **dadurch gekennzeichnet, dass** die Aufzeichnungsschicht (c) einen anorganischen Füllstoff (c3) mit einer Härte von > 4 Mohs enthält.

6. Lasergravierbare Tampondruckplatte nach einem der Ansprüche 1 bis 5, **dadurch gekennzeichnet, dass** die Aufzeichnungsschicht (c) als anorganischen Füllstoff (c3) ein Quarzmehl, dessen Oberfläche mit Silanen modifiziert wurde, enthält.

7. Lasergravierbare Tampondruckplatte nach einem der Ansprüche 1 bis 6, **dadurch gekennzeichnet, dass** die Summe von IR-Absorber (c2) und anorganischem Füllstoff (c3) in der Aufzeichnungsschicht < 50 Gew.-% beträgt.

8. Lasergravierbare Tampondruckplatte nach Anspruch 7, **dadurch gekennzeichnet, dass** der Vernetzer Glyoxal oder Glutardialdehyd ist.

9. Lasergravierbare Tampondruckplatte nach einem der Ansprüche 1 bis 8, **dadurch gekennzeichnet, dass** die Haftschicht ein 2K-Polyurethanhaftlack ist.

10. Lasergravierbare Tampondruckplatte nach einem der Ansprüche 1 bis 9, **dadurch gekennzeichnet, dass** der Metallträger (a) ein Stahlblech mit einer Dicke von 50 bis 300 µm ist.

11. Lasergravierbare Tampondruckplatte nach einem der Ansprüche 1 bis 10, **dadurch gekennzeichnet, dass** die Deckfolie eine PET-Folie mit einer mittleren Rautiefe Rz von 0,3 bis 3 µm ist.

12. Verfahren zur Herstellung einer Tampondruckplatte umfassend mindestens
(a) einen Metallträger
(b) eine Haftschicht
(c) eine lasergravierbare Aufzeichnungsschicht mit einer Schichtdicke von 20 µm bis 200 µm,
(d) eine Deckfolie,
wobei die lasergravierbare Aufzeichnungsschicht (c)
(c1) 40 bis 95 Gew.-% eines Polyvinylalkohols,
(c2) 5 bis 50 Gew.-% eines IR-Absorbers,
(c3) 0 bis 30 Gew.-% eines anorganischen Füllstoffes,
(c4) 0 bis 20 Gew.-% eines Vernetzers und
(c5) 0 bis 10 Gew.-% weiterer Additive.
enthält,
mit den Schritten (i) bis (iii):
(i) Beschichtung des Metallträgers mit der Haftschicht,
(ii) Auftragen der lasergravierbaren Aufzeichnungsschicht auf die PET-Deckfolie und Trocknung der Aufzeichnungsschicht in einem oder mehreren Schritten,
(iii) Auflaminieren der beschichteten PET-Deckfolie auf den mit der Haftschicht beschichteten Metallträger.

13. Verfahren zur Herstellung eines Tampondruckklischees aus einer lasergravierbaren Tampondruckplatte wie in Anspruch 12 definiertmit den Schritten (iv) bis (vi):
(iv) Abziehen der Deckfolie von der Tampondruckplatte,
(v) Eingravieren der Vertiefungen in die lasergravierbare Aufzeichnungsschicht mittels eines IR-Lasers,
(vi) Reinigung des lasergravierten Tampondruckklischees durch Abspülen mit einem Lösungsmittel.

14. Verfahren zum Bedrucken eines Substrates im Tampondruckverfahren mit einem Tampondruckklischee, das nach dem Verfahren gemäß Anspruch 13 erhältlich ist, mit den Schritten (vii) bis (x):
(vii) Befestigung des Tampondruckklischees in der Tampondruckmaschine,
(viii) Einfärben des Tampondruckklischees mit einer lösemittelbasierten Tampondruckfarbe,
(ix) Abstreifen der überschüssigen Druckfarbe mittels eines Rakels,
(x) Übertragung der Druckfarbe mittels eines Tampongummis auf das zu bedruckende Substrat.

## Claims

1. Laser-engravable pad printing plate comprising at least
(a) a metal support,
(b) an adhesion layer,
(c) a laser-engravable recording layer having a layer thickness of 20 µm to 200 µm comprising
(c1) 40 to 95 wt% of a polyvinyl alcohol,
(c2) 5 to 50 wt% of an IR absorber,
(c3) 0 to 30 wt% of an inorganic filler,
(c4) 0.1 to 20 wt% of a crosslinker, and
(c5) 0 to 10 wt% of further additives,
(d) a cover film,
**characterized in that** the crosslinker (c4) is selected from the group consisting of polyfunctional isocyanates, mono- or polyfunctional aldehydes, polyfunctional epoxides, polyfunctional carboxylic acids and polyfunctional carboxylic anhydrides.

2. Laser-engravable pad printing plate according to Claim 1, **characterized in that** the laser-engravable recording layer (c) comprises as polyvinyl alcohol (c1) a partially hydrolyzed polyvinyl alcohol ester having a degree of hydrolysis of 50 to 98 mol%.

3. Laser-engravable pad printing plate according to Claim 1 or 2, **characterized in that** the recording layer (c) comprises as IR absorber (c2) carbon black, graphite or carbon nanoparticles.

4. Laser-engravable pad printing plate according to any of Claims 1 to 3, **characterized in that** the recording layer (c) comprises 5 to 30 wt% of an inorganic filler.

5. Laser-engravable pad printing plate according to any of Claims 1 to 4, **characterized in that** the recording layer (c) comprises an inorganic filler (c3) having a hardness of > 4 Mohs.

6. Laser-engravable pad printing plate according to any of Claims 1 to 5, **characterized in that** the recording layer (c) comprises as inorganic filler (c3) a finely ground quartz whose surface has been modified with silanes.

7. Laser-engravable pad printing plate according to any of Claims 1 to 6, **characterized in that** the sum total of IR absorber (c2) and inorganic filler (c3) in the recording layer is < 50 wt%.

8. Laser-engravable pad printing plate according to Claim 7, **characterized in that** the crosslinker is glyoxal or glutaraldehyde.

9. Laser-engravable pad printing plate according to any of Claims 1 to 8, **characterized in that** the adhesion layer is a 2-component polyurethane adhesion varnish.

10. Laser-engravable pad printing plate according to any of Claims 1 to 9, **characterized in that** the metal support (a) is a steel plate having a thickness of 50 to 300 µm.

11. Laser-engravable pad printing plate according to any of Claims 1 to 10, **characterized in that** the cover film is a PET film having a mean roughness depth Rz of 0.3 to 3 µm.

12. Method for producing a pad printing plate comprising at least
(a) a metal support,
(b) an adhesion layer,
(c) a laser-engravable recording layer having a layer thickness of 20 µm to 200 µm,
(d) a cover film,
wherein the laser-engravable recording layer (c) comprises
(c1) 40 to 95 wt% of a polyvinyl alcohol,
(c2) 5 to 50 wt% of an IR absorber,
(c3) 0 to 30 wt% of an inorganic filler,
(c4) 0 to 20 wt% of a crosslinker, and
(c5) 0 to 10 wt% of further additives,
with the steps (i) to (iii):
(i) coating the metal support with the adhesion layer,
(ii) applying the laser-engravable recording layer to the PET cover film and drying the recording layer in one or more steps,
(iii)laminating the coated PET cover film onto the metal support coated with the adhesion layer.

13. Method for producing a pad printing cliché from a laser-engravable pad printing plate as defined in Claim 12, with the steps (iv) to (vi):
(iv) removing the cover film from the pad printing plate,
(v) engraving the depressions into the laser-engravable recording layer by means of an IR laser,
(vi) cleaning the laser-engraved pad printing cliché by rinsing with a solvent.

14. Method for printing a substrate by the pad printing process with a pad printing cliché obtainable by the method of Claim 13, with the steps (vii) to (x):
(vii) fastening the pad printing cliché in the pad printing machine,
(viii) inking the pad printing cliché with a solvent-based pad printing ink,
(ix) stripping off the excess printing ink by means of a doctor blade,
(x) transferring the printing ink by means of a rubber pad onto the substrate to be printed.

## Revendications

1. Plaque de tampographie pouvant être gravée par laser, comprenant au moins :
(a) un support métallique,
(b) une couche adhésive,
(c) une couche d'inscription pouvant être gravée par laser, d'une épaisseur de couche de 20 µm à 200 µm, contenant :
(c1) 40 à 95 % en poids d'un alcool polyvinylique,
(c2) 5 à 50 % en poids d'un absorbeur IR,
(c3) 0 à 30 % en poids d'une charge inorganique,
(c4) 0,1 à 20 % en poids d'un agent de réticulation et
(c5) 0 à 10 % en poids d'autres additifs,
(d) une feuille de couverture,
**caractérisée en ce que** l'agent de réticulation (c4) est choisi dans le groupe constitué par les isocyanates polyfonctionnels, les aldéhydes mono- ou polyfonctionnels, les époxydes polyfonctionnels, les acides carboxyliques polyfonctionnels et les anhydrides d'acides carboxyliques polyfonctionnels.

2. Plaque de tampographie pouvant être gravée par laser selon la revendication 1, **caractérisée en ce que** la couche d'inscription pouvant être gravée par laser (c) contient en tant qu'alcool polyvinylique (c1) un ester d'alcool polyvinylique partiellement saponifié ayant un degré de saponification de 50 à 98 % en moles.

3. Plaque de tampographie pouvant être gravée par laser selon la revendication 1 ou 2, **caractérisée en ce que** la couche d'inscription (c) contient en tant qu'absorbeur IR (c2) du noir de carbone, du graphite ou des nanoparticules de carbone.

4. Plaque de tampographie pouvant être gravée par laser selon l'une quelconque des revendications 1 à 3, **caractérisée en ce que** la couche d'inscription (c) contient 5 à 30 % en poids d'une charge inorganique.

5. Plaque de tampographie pouvant être gravée par laser selon l'une quelconque des revendications 1 à 4, **caractérisée en ce que** la couche d'inscription (c) contient une charge inorganique (c3) d'une dureté > 4 Mohs.

6. Plaque de tampographie pouvant être gravée par laser selon l'une quelconque des revendications 1 à 5, **caractérisée en ce que** la couche d'inscription (c) contient en tant que charge inorganique (c3) une farine de quartz, dont la surface a été modifiée avec des silanes.

7. Plaque de tampographie pouvant être gravée par laser selon l'une quelconque des revendications 1 à 6, **caractérisée en ce que** la somme de l'absorbeur IR (c2) et de la charge inorganique (c3) dans la couche d'inscription est < 50 % en poids.

8. Plaque de tampographie pouvant être gravée par laser selon la revendication 7, **caractérisée en ce que** l'agent de réticulation est le glyoxal ou le glutardialdéhyde.

9. Plaque de tampographie pouvant être gravée par laser selon l'une quelconque des revendications 1 à 8, **caractérisée en ce que** la couche adhésive est un vernis adhésif à base de polyuréthane bicomposant.

10. Plaque de tampographie pouvant être gravée par laser selon l'une quelconque des revendications 1 à 9, **caractérisée en ce que** le support métallique (a) est une tôle en acier d'une épaisseur de 50 à 300 µm.

11. Plaque de tampographie pouvant être gravée par laser selon l'une quelconque des revendications 1 à 10, **caractérisée en ce que** la feuille de couverture (d) est une feuille en PET d'une profondeur de rugosité moyenne Rz de 0,3 à 3 µm.

12. Procédé de fabrication d'une plaque de tampographie, comprenant au moins :
(a) un support métallique,
(b) une couche adhésive,
(c) une couche d'inscription pouvant être gravée par laser, d'une épaisseur de couche de 20 µm à 200 µm,
(d) une feuille de couverture,
la couche d'inscription pouvant être gravée par laser (c) contenant :
(c1) 40 à 95 % en poids d'un alcool polyvinylique,
(c2) 5 à 50 % en poids d'un absorbeur IR,
(c3) 0 à 30 % en poids d'une charge inorganique,
(c4) 0,1 à 20 % en poids d'un agent de réticulation et
(c5) 0 à 10 % en poids d'autres additifs,
comprenant les étapes (i) à (iii) :
(i) le revêtement du support métallique avec la couche adhésive,
(ii) l'application de la couche d'inscription pouvant être gravée par laser sur la feuille de couverture en PET et le séchage de la couche d'inscription en une ou plusieurs étapes,
(iii) la stratification de la feuille de couverture en PET revêtue sur le support métallique revêtu avec la couche adhésive.

13. Procédé de fabrication d'un cliché de tampographie à partir d'une plaque de tampographie pouvant être gravée par laser telle que définie dans la revendication 12, comprenant les étapes (iv) à (vi) :
(iv) la soustraction de la feuille de couverture de la plaque de tampographie,
(v) la gravure des creux dans la couche d'inscription pouvant être gravée par laser au moyen d'un laser IR,
(vi) le nettoyage du cliché de tampographie gravé par laser par rinçage avec un solvant.

14. Procédé d'impression d'un substrat par le procédé de tampographie avec un cliché de tampographie, qui peut être obtenu par le procédé selon la revendication 13, comprenant les étapes (vii) à (x) :
(vii) la fixation du cliché de tampographie dans la machine de tampographie,
(viii) la coloration du cliché de tampographie avec une encre de tampographie à base d'un solvant,
(ix) le raclage de l'encre d'impression en excès avec une racle,
(x) le transfert de l'encre d'impression au moyen d'une gomme de tamponnage sur le substrat à imprimer.
